# EUROPEAN PATENT SPECIFICATION

(11) **EP 3 450 004 B1**
(45) Date of publication and mention of the grant of the patent: **21.07.2021**
(21) Application number: 17845419.5
(22) Date of filing: 30.08.2017
(51) Int. Cl.: B01F 7/16, B01F 15/00, A47J 43/044

(54) **HIGH-POWER MIXING DEVICE**
HOCHLEISTUNGSMISCHER
DISPOSITIF DE MÉLANGE À HAUTE PUISSANCE

(30) Priority: 05.09.2016 CN 201621036710 U
(43) Date of publication of application: 06.03.2019
(73) Proprietor: Shenzhen Pinvos Technology Co., Ltd., Shenzhen, Guangdong 518000 (CN)
(72) Inventor: WANG, Wenhui, Shenzhen Guangdong 518000 (CN)
(74) Representative: Ipside
(86) International application number: PCT/CN2017/099569
(87) International publication number: WO 2018/041117

(56) References cited:
- CN-A- 103 191 662
- CN-A- 103 525 540
- CN-B- 103 191 662
- CN-U- 206 082 298
- FR-A- 1 150 102
- GB-A- 210 702
- US-A- 2 007 299
- US-A- 5 112 135

## Description

### TECHNICAL FIELD

The present invention relates to a stand mixer, and in particular to a shell structure of a stand mixer.

### BACKGROUND

A base of a traditional stand mixer is usually made by die-casting with aluminum or zinc alloy, or plastic injection molding. The shell made by these methods has one or more cavities, and the shell has a thickness of generally 2-3.5 mm which is a little thin. Therefore, ribs are adopted to increase strength of the shell, which results in the drawbacks of the bottom of base with a complex structure, complex processing and hard cleaning.

Document FR1150102A, discloses (cf. Fig. 1) a stand mixer comprising: a main body (11) and a base (1-3) used to support the main body (11), a motor (18) being disposed in the main body for driving a mixing tool (14). As can be seen from fig. 1 in document FR1150102A, the bottom surface of the base 1 has no cavity and can be cleaned conveniently. However, it can also be seen from document FR1150102A that the mixture bowl 9 needs to be double fitted with the heater plate 4 and the extension 10 of the housing 5, which is not conducive to the installation and disassembly of the mixture bowl 9.

### SUMMARY

The present invention solves a technical problem by providing an easy-cleaning stand mixer and avoiding the drawbacks of the traditional technology.

The technical solution of the present invention for overcoming the technical problem is as follows: providing a stand mixer, comprising a main body and a base used to support the main body, a motor being disposed in the main body for driving a mixing tool, the base comprising a suspending plate configured to support the main body, a base plate configured to support a mixing bowl, and a middle plate connecting the suspending plate and the base plate, the suspending plate, the base plate and the middle plate being an integrally formed solid thin plate.

Furthermore:
The base has an inverted C configuration.

The thickness of the solid thin plate is between 12-30mm.

The connection between the middle plate and the base plate is curved.

A mixing bowl mounting seat is provided on an upper surface of the base plate.

A hinge is provided obliquely below the joint between the suspending plate and the middle plate, and the base supports the main body by means of the hinge.

A main body lock hole is defined in the suspending plate.

Comparing with the traditional technology, as no cavity is formed in the bottom of the base of the present invention, the base of the present invention has a simple configuration and it is easy cleaning.

### BRIEF DESCRIPTION OF DRAWINGS

FIG.1 is a perspective view of a stand mixer of the present invention.
FIG.2 is a perspective view of a base of the stand mixer of the present invention.
FIG.3 illustrates the main outline of the base.

### DETAILED DESCRIPTION OF THE EMBODIMENTS

Below, embodiments of the present invention will be described in greater detail with reference to the drawings.

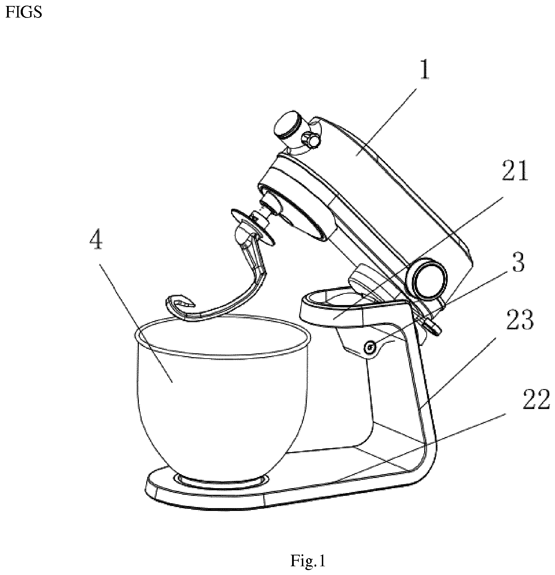

Figs. 1-3 illustrate a stand mixer which comprises a main body 1 and a base 2 for supporting the main body 1. A motor is disposed in the main body 1 and used to drive a mixing tool. The base 2 comprises a suspending plate 21 used to support the main body 1, a base plate 22 used to support a mixing bowl, and a middle plate 23 connected between the suspending plate 21 and the base plate 22. The suspending plate 21, the base plate 22, and the middle plate 23 are integrally formed into a solid thin plate.

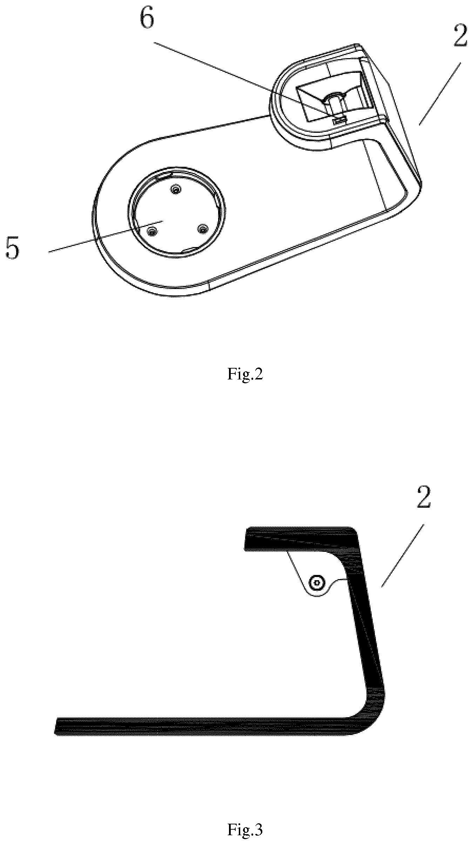

When processing the base 2, using semi-fusion hot forging process, the suspending plate 21, the base plate 22 and the middle plate 23 are pressed into a solid thin plate. The base 2 is integrally formed into one piece. In some embodiments, the base 2 has an inverted C configuration, as a show in fig 3. Because the base 2 has a simple configuration, the difficulty of subsequent surface treatment is greatly reduced. For hot forging process, the metal manufacturing structure strength is high, the thickness of the solid thin plate can be chosen between 12-30 mm according to specific needs, like 19 mm.

A hinge 2 is provided obliquely below the joint between the suspending plate 21 and the middle plate 23, The base 2 supports the main body 1 by means of the hinge 3. The main body 1 rotates around the hinge 3 to achieve the head lifting function. A mixing bowl mounting seat 5 is provided on the upper of the base plate 22 for facilitating installation and disassembly of the mixing bowl 4. The connection between the middle plate 23 and the base plate 22 may be designed with a curved shape. A main body lock hole 6 is defined in the suspending plate 21, used to lock the main body and unlock the main body in order to achieve the head lifting function of main body.

It should be noted that the embodiments of the present invention are illustrative rather than limiting. A person skilled in the art may make various modifications based on the technical solutions of embodiments, or make various equal replacements of some technical features. The modifications and the equal replacements should be within the scope of the present invention.

## Claims

1. A stand mixer comprising: a main body (1) and a base (2) used to support the main body (1), a motor being disposed in the main body (1) for driving a mixing tool, the base (2) comprises a suspending plate (21) configured to support the main body (1); a base plate (22) configured to support a mixing bowl; and a middle plate (23) connecting the suspending plate (21) and the base plate (22), the suspending plate (21), the base plate (22), and the middle plate (23) being an integrally formed solid thin plate, **characterized in that** : a mixing bowl mounting seat (5) is provided on an upper surface of the base plate (22).

2. The stand mixer of claim 1, **characterized in that**: the base (2) has an inverted C configuration.

3. The stand mixer of claim 1, **characterized in that**: the thickness of the solid thin plate is between 12-30mm.

4. The stand mixer of claim 1, **characterized in that**: the connection between the middle plate (23) and the base plate (22) is curved.

5. The stand mixer of claim 1, **characterized in that**: a hinge (3) is provided obliquely below the joint between the suspending plate (21) and the middle plate (23) , the base (2) supports the main body (1) by means of the hinge (3).

6. The stand mixer of claim 1, **characterized in that**: a main body lock hole (6) is defined in the suspending plate (21).

## Patentansprüche

1. Standmischer, umfassend: ein Hauptgehäuse (1) und einen Sockel (2), der verwendet wird, um das Hauptgehäuse (1) zu stützen, einen Motor, der in dem Hauptgehäuse (1) angeordnet ist, zum Antreiben eines Mischwerkzeugs, der Sockel (2) umfasst eine Aufhängungsplatte (21), die konfiguriert ist, um das Hauptgehäuse (1) zu stützen; eine Sockelplatte (22), die konfiguriert ist, um eine Mischschüssel zu stützen; und eine Mittelplatte (23), die die Aufhängungsplatte (21) und die Sockelplatte (22) verbindet, wobei die Aufhängungsplatte (21), die Sockelplatte (22) und die Mittelplatte (23) eine in einem Stück gebildete feste dünne Platte sind, **dadurch gekennzeichnet, dass**: ein Mischschüssel-Montagesitz (5) an einer oberen Oberfläche der Sockelplatte (22) bereitgestellt ist.

2. Standmischer nach Anspruch 1, **dadurch gekennzeichnet, dass**: der Sockel (2) eine Konfiguration eines umgekehrten C aufweist.

3. Standmischer nach Anspruch 1, **dadurch gekennzeichnet, dass**: die Dicke der festen dünnen Platte zwischen 12-30 mm liegt.

4. Standmischer nach Anspruch 1, **dadurch gekennzeichnet, dass**: die Verbindung zwischen der Mittelplatte (23) und der Sockelplatte (22) gekrümmt ist.

5. Standmischer nach Anspruch 1, **dadurch gekennzeichnet, dass**: ein Scharnier (3) schräg unterhalb der Fügestelle zwischen der Aufhängungsplatte (21) und der Mittelplatte (23) bereitgestellt ist, der Sockel (2) das Hauptgehäuse (1) anhand des Scharniers (3) stützt.

6. Standmischer nach Anspruch 1, **dadurch gekennzeichnet, dass**: ein Verriegelungsloch (6) des Hauptgehäuses in der Aufhängungsplatte (21) definiert ist.

## Revendications

1. Dispositif de mélange sur socle comprenant : un corps principal (1) et une base (2) utilisée pour supporter le corps principal (1), un moteur étant disposé dans le corps principal (1) pour entraîner un outil de mélange, la base (2) comprend une plaque de suspension (21) configurée pour supporter le corps principal (1) ; une plaque de base (22) configurée pour supporter un bol de mélange ; et une plaque centrale (23) reliant la plaque de suspension (21) et la plaque de base (22), la plaque de suspension (21), la plaque de base (22), et la plaque centrale (23) étant une plaque mince solide formée d'une seule pièce, **caractérisé en ce que** : un siège de montage de bol de mélange (5) est prévu sur une surface supérieure de la plaque de base (22) .

2. Dispositif de mélange sur socle selon la revendication 1, **caractérisé en ce que** : la base (2) présente une configuration en C inversé.

3. Dispositif de mélange sur socle selon la revendication 1, **caractérisé en ce que** : l'épaisseur de la plaque mince solide est comprise entre 12 et 30 mm.

4. Dispositif de mélange sur socle selon la revendication 1, **caractérisé en ce que** : la liaison entre la plaque centrale (23) et la plaque de base (22) est courbée.

5. Dispositif de mélange sur socle selon la revendication 1, **caractérisé en ce que** : une articulation (3) est prévue de manière oblique au-dessous du joint entre la plaque de suspension (21) et la plaque centrale (23), la base (2) supporte le corps principal (1) au moyen de l'articulation (3) .

6. Dispositif de mélange sur socle selon la revendication 1, **caractérisé en ce que** : un trou de verrouillage de corps principal (6) est défini dans la plaque de suspension (21) .
